# EUROPEAN PATENT SPECIFICATION

(11) **EP 4 532 282 B1**
(45) Date of publication and mention of the grant of the patent: **08.04.2026**
(21) Application number: 23729179.4
(22) Date of filing: 15.05.2023
(51) Int. Cl.: B60T 17/22, B60W 30/18, F16D 55/00, F16D 66/02, F16D 66/00

(54) **A MOTOR-VEHICLE AND METHOD FOR CONTROLLING A MOTOR-VEHICLE, BASED ON MONITORING THE TEMPERATURE AND WEAR OF THE BRAKE PADS OF THE MOTOR-VEHICLE'S DISC BRAKES**
KRAFTFAHRZEUG UND VERFAHREN ZUR STEUERUNG EINES KRAFTFAHRZEUGS, BASIEREND AUF DER ÜBERWACHUNG DER TEMPERATUR UND DES VERSCHLEISSES DER BREMSBELÄGE DER SCHEIBENBREMSEN DES KRAFTFAHRZEUGS
VÉHICULE À MOTEUR ET PROCÉDÉ DE COMMANDE D'UN VÉHICULE À MOTEUR, BASÉ SUR LA SURVEILLANCE DE LA TEMPÉRATURE ET DE L'USURE DES PLAQUETTES DE FREIN DES FREINS À DISQUE DU VÉHICULE À MOTEUR

(30) Priority: 26.05.2022 IT 202200011018
(43) Date of publication of application: 09.04.2025
(73) Proprietor: C.R.F. Società Consortile per Azioni, 10043 Orbassano (Torino) (IT)
(72) Inventor: IELUZZI, Michele, 10043 Orbassano (Torino) (IT); BADINO, Renato, 10135 Torino (IT)
(74) Representative: Buzzi, Notaro & Antonielli d'Oulx S.p.A.
(86) International application number: PCT/IB2023/054975
(87) International publication number: WO 2023/227999

(56) References cited:
- EP-B1- 2 057 386
- WO-A1-2020/099329
- US-B2- 10 328 802

## Description

### Field of the invention

The present invention relates to motor-vehicles, of the type comprising:
- a plurality of disc brakes associated with the wheels of the motor-vehicle,
- each disc brake including a disc connected in rotation with the respective wheel, and a brake caliper provided with brake pads cooperating with the disc,
- a braking system to control the operation of said disc brakes following the intervention of the driver on a brake pedal or following the intervention of an automatic braking system with which the vehicle is provided, and
- an electronic controller of said braking system,
- wherein, moreover, with each brake pad of each disc brake there is associated a sensor configured to send a signal to said electronic controller, which is indicative of the temperature of the brake pad and a signal indicative of wear, in terms of reduction of the thickness, of the brake pad.

### Prior art

A sensor of the type indicated above, capable of continuously detecting both the temperature and the wear of a brake pad of a disc brake is, for example, described and illustrated in document WO 2020/202102 A1**.**

Studies and experiments by the Applicant have led to the finding that the use of sensors of the type indicated above can open the way to new and advantageous functions for controlling a motor-vehicle. The present invention intends to respond to these needs.

A motor-vehicle according to the preamble of claim 1 is known from EP 2 057 386 B1. Further solutions are known from WO 2020/099329 A1 and US 10 328 802 B2.

### Object of the invention

Therefore, an object of the present invention is to provide new and advantageous methods of controlling a motor-vehicle on the basis of monitoring the temperature and the wear of the brake pads of the disc brakes with which the motor-vehicle is provided.

### Summary of the invention

With a view to achieving this object, the invention relates to a motor-vehicle having the characteristics that are indicated in claim 1 and preferably also the additional characteristics that are indicated in the dependent claims 2-4.

The invention also relates to a method having the characteristics that are indicated in the attached claim 5, and preferably also having the additional characteristics that are indicated in the dependent claims 6-8.

### Detailed description of the invention

The characteristics and advantages of the invention will become apparent from the description that follows with reference to the attached drawings, provided purely by way of limiting example, wherein:
- Figure 1 is a diagram of a braking system of a motor-vehicle, to which the control system of the present invention is applied,
- Figure 2 is a schematic cross-sectional view of an example of a disc brake that can be used in the system according to the invention, and
- Figures 3, 4 are Tables showing the different operating modes which can be implemented with the system according to the invention.

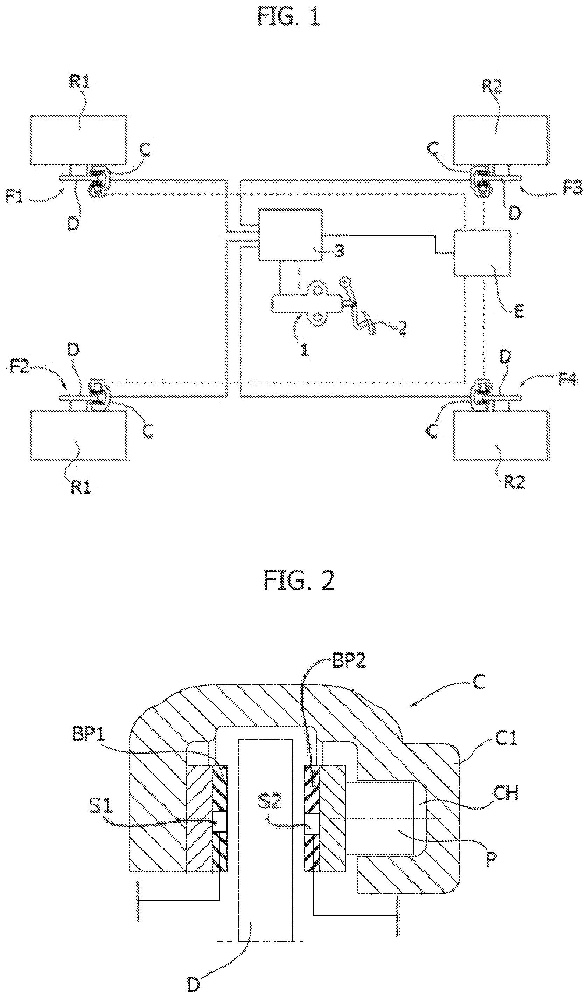

In Figure 1, the references R1, R2, indicate the two front wheels and the two rear wheels, respectively, of a motor-vehicle, each of which is associated with a disc brake, indicated by F1, F2, F3, F4, respectively. Each of the disc brakes F1-F4 can be made according to any known technique and each comprises a disc D rigidly connected to the wheel hub, so as to be able to rotate with the wheel, and a brake caliper C carried by the motor-vehicle structure (not shown) and configured for engaging disc D to slow down its rotation.

Figure 2 shows - by way of example - a schematic and partial cross-sectional view of a disc brake, including a disc D (of which only the peripheral portion is shown), and a caliper C including a caliper body C1 of a floating type, on which a brake pad BP1 suitable for engaging a face of the disc D is rigidly connected. The opposite face of the disc D is designed to be engaged by a second brake pad BP2 carried by a piston P of the fluid actuator of the brake caliper. The piston P is slidably mounted within a chamber CH defined by the body C1 of the brake caliper. The chamber CH is designed to be supplied with pressurized fluid so as to push the piston P to the left (with reference to the drawing) so as to press the pad BP2 against one face of the disc D. At the same time, the supply of pressurized fluid inside the chamber CH also causes a shift towards the right (with reference to the drawing) of the entire body C1 of the brake caliper, so that the brake pad BP1 is pressed against the left side (with reference to the drawing) of the brake disc D.

Of course, the present description is provided here purely by way of example, and is limited to the essential components of the brake, the construction details being of any known type, according to the general knowledge of those skilled in the art. In particular, the configuration of the brake caliper may be of any known type, the case of a floating caliper being shown here purely by way of non-limiting example.

Still according to the prior art, the motor-vehicle is provided with a braking device 1 (Figure 1) operated by a brake pedal 2 and hydraulically connected to a pressure modulator assembly 3, which controls the supply of the pressurized fluid to the fluid actuators of the brake calipers C, each fluid actuator being defined by the chamber CH and the piston P sliding within it.

Still according to the prior art, the braking system comprises an electronic controller E connected to the modulator 3 for controlling the operation of the system of the invention.

According to the invention, a sensor is associated with at least one of the brake pads BP1, BP2 of at least some of the disc brakes (Figure 2 shows the example of two sensors S1, S2 associated with the two brake pads) of any known type, configured for continuously detecting the temperature and wear, in terms of size and thickness, of the respective brake pad. Again by way of non-limiting example, Figure 1 shows the case wherein all disc brakes F1-F4 are equipped with sensors, on one or both brake calipers (the dashed lines indicate the connection of the sensors S1, S2, associated with each disc brake with the electronic controller E). Of course it could be envisaged that the sensors would be associated with one or both brake pads of only some of the disc brakes. It could also be envisaged that only one sensor is associated with one of the disc brakes of the front wheels, and only one sensor associated with only one of the disc brakes of the rear wheels. In the following description, reference is made, purely by way of non-limiting example, to the case wherein each of the disc brakes F1-F4 is provided with at least one sensor associated with a brake pad.

According to the present invention, depending on the signals provided by the sensors S1, S2 of the various disc brakes of the motor-vehicle to the electronic controller E, this electronic controller is configured to implement a series of different operating modes which are set out below.

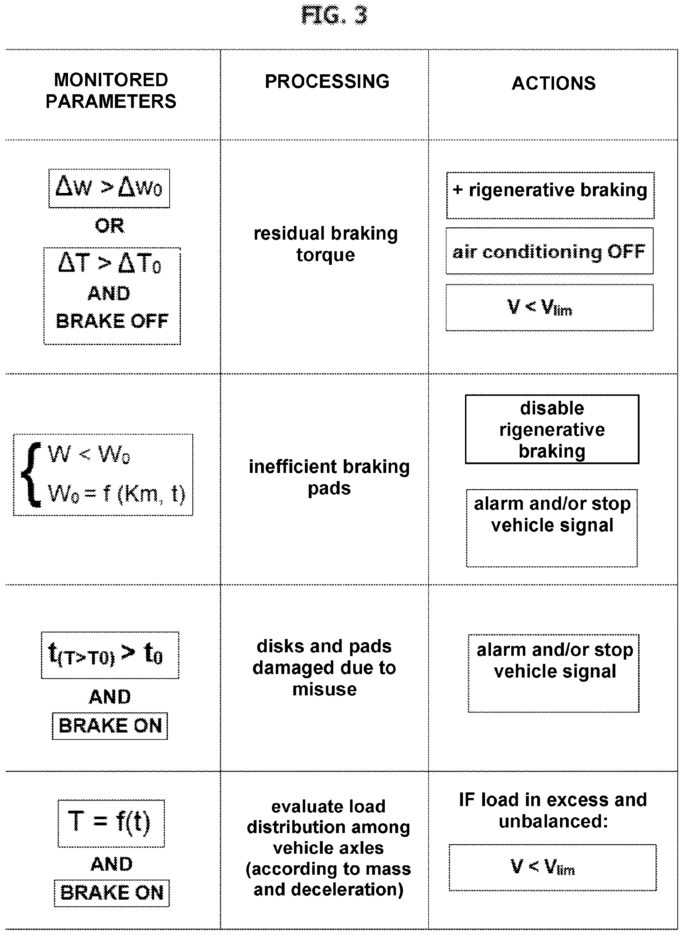

According to a first operating mode, the electronic controller E is configured in such a way that:
- when the sensors S1, S2 of the wear and temperature of the brake pads BP1, BP2 of the disc brakes F1 - F4 detect wear of the brake pads - in terms of thickness reduction - of a single disc brake that exceeds the wear of the brake pads of the other disc brakes of the motor-vehicle by a value **ΔW** greater than a predetermined threshold **ΔW**₀ (see the first row of the Table in Figure 3),
   or
- when the aforesaid sensors S1, S2 detect a temperature of the brake pads of a single disc brake that exceeds the temperature of the brake pads of the other disc brakes of the motor-vehicle by a value **ΔT** greater than a threshold **ΔT**₀, with the braking system being inactive,
the aforesaid condition is interpreted as an indication of a blocked disc brake, and the electronic controller E performs the following operations:
- the controller activates an operating mode, wherein, during braking, a braking effect obtained by means of a regenerative braking system with which the vehicle is equipped is exploited to the maximum extent,
- the controller disables an air conditioning system of the vehicle, to reduce energy consumption,
- the controller prevents the vehicle speed W from exceeding a predetermined maximum limit W_{LIM} to maintain a safe condition even with inefficient disc brakes.

As indicated, the aforesaid operating mode is schematized in the first row of the Table in Figure 3.

According to a further operating mode provided in the present invention, the electronic controller E is configured to also perform the following operation (see the second row of the Table on page 3):
- when the sensors S1, S2 of the wear and temperature of the brake pads BP1, BP2 of the disc brakes F1 - F4 detect wear W (understood as a decrease in thickness) of the brake pads of at least one of the disc brakes of the motor-vehicle, which is lower than a predetermined threshold value W₀, where this threshold value is calculated as a function of the kilometers traveled by the motor-vehicle and as a function of the time elapsed since the last replacement of the brake pads,
this condition is interpreted as an index of aging and/or loss of efficiency and/or risk of detachment of the brake pads due to prolonged inactivity, and the electronic controller E performs the following operations:
- the controller disables a regenerative braking system with which the vehicle is provided, to facilitate running-in of the brake pads, and
- the controller generates an alarm signal for the driver and/or signals the need to stop the vehicle and/or the need to take the vehicle to the workshop to replace the brake pads.

According to a further operating mode envisaged in the present invention, which is schematized in the third row of the Table of Figure 3, the electronic controller E is configured to calculate the total length of time wherein the sensors S1, S2 detect, during braking, exceeding of a maximum threshold temperature T₀ of a brake pad of one of the disc brakes of the motor-vehicle, in such a way that:
- when, during braking, the duration t_{(T>T0)} wherein the temperature is above said maximum threshold temperature, exceeds a predetermined length of time (t₀),
this condition is interpreted as due to damage in one or more brake discs and one or more brake pads following a *misuse* of the braking system, and said electronic controller E generates an alarm signal for the driver and/or indicates the need to stop the vehicle and/or the need to take the vehicle to the workshop.

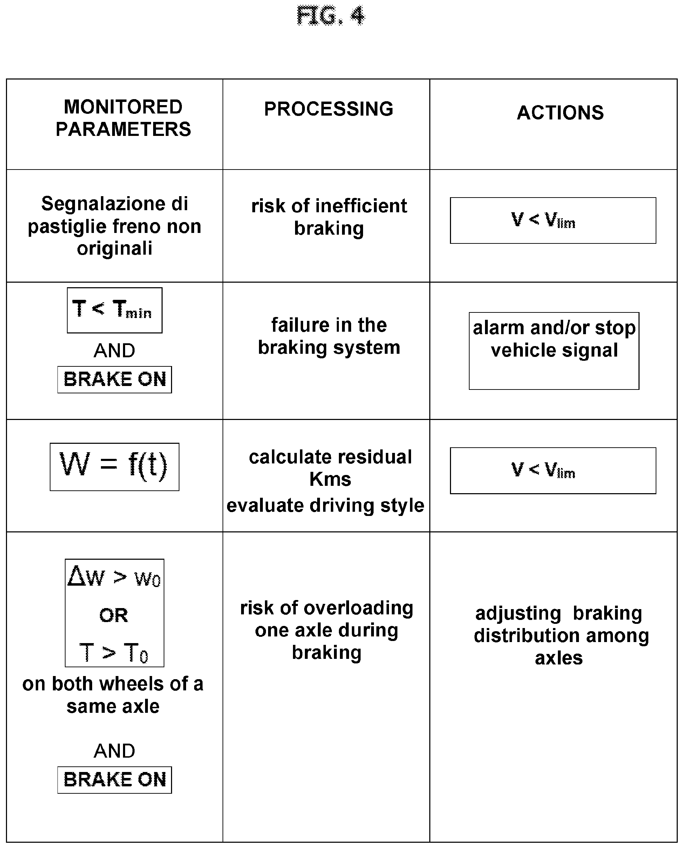

Preferably, the electronic controller E is further configured to perform one or more of the following operations:
a) with reference to the last row of the Table of Figure 3, the electronic controller E detects, during braking, the variation over time of the temperature signaled by the sensors S1, S2 for the brake pads BP1, BP2 associated with the different axles of the vehicle, and estimating the mass of the vehicle and the distribution of the load on the vehicle axles, as a function of said detected variation of the temperature and on the basis of some information on the longitudinal acceleration of the vehicle, the information being transmitted to said electronic controller E by an acceleration sensor (not illustrated), and, when a load on an axle of the vehicle that exceeds a predetermined threshold is detected, or if a difference between the loads on the vehicle axles that exceeds a predetermined threshold is detected, the electronic controller E prevents the vehicle speed from exceeding a predetermined maximum limit (W_{LIM}), to maintain a safety condition,
b) the electronic controller E is also configured to detect a condition wherein the aforesaid sensors S1, S2 signal, for at least one of the disc brakes F1-F4, the presence of a non-original brake pad (i.e. a brake pad of a different type than that envisaged in the original equipment of the motor-vehicle by the motor-vehicle manufacturer), the sensors S1, S2 being configured to detect a code associated with the original brake pads and prevent, when the presence of a non-original brake pad is detected, the vehicle speed exceeds a predetermined maximum limit W_{LIM} to ensure a safe condition;
c) with reference to the second row of the Table of Figure 4, the electronic controller E is configured to detect a condition wherein, during braking, the temperature T of a brake pad of at least one of the disc brakes of the motor-vehicle remains below a predetermined threshold value T_{MIN}, this condition being interpreted as an indication of a failure of the braking system or hydraulic losses in the braking system, so that the electronic controller E, in this condition, generates an alarm signal for the driver and/or a notification of the need to stop the vehicle and/or the need to take the vehicle to the workshop;
d) with reference to the third row of the Table of Figure 4, the electronic controller E is also configured to detect the variation in wear W of the brake pads BP1, BP2 of the disc brakes F1-F4 of the motor-vehicle over time, to estimate, on the basis of this detected variation, the kilometers of residual life of the brake pads BP1, BP2, to evaluate the driving style with which the motor-vehicle is driven, according to information received from the electronic controller E on parameters indicative of the driving style, such as, for example, frequency and intensity of braking, longitudinal and transversal accelerations of the motor-vehicle, engine rpm, the electronic controller being able to limit the maximum speed of the vehicle near the end of the estimated life of the brake pads and/or if the driving style detected indicates a condition of lack of safety;
e) with reference to the last row of the Table of Figure 4, the electronic controller E is also configured to detect, by means of the sensors S1, S2, when there is wear **Δ**W higher than a threshold value W₀, or a temperature T higher than a threshold value T₀ on the brake pads of the disc brakes of the same axle of the vehicle, during braking; in this case, the electronic controller interprets this condition as an indication of an overload on one axle of the vehicle during braking, and consequently controls the braking system to vary the ratio between the braking actions on the various axles of the vehicle. Thanks to the aforesaid characteristics, the control system according to the invention drastically increases the safety level of the motor-vehicle, without at the same time involving a more complex or more expensive structure. The invention lends itself to being used both on conventional motor-vehicles, with internal combustion engines, as well as on electric or hybrid vehicles or even on self-driving motor-vehicles. Likewise, the invention is applicable both to braking systems of the conventional type, with hydraulically actuated disc brakes, and also to braking systems using electro-actuated brake calipers.

Of course, without prejudice to the principle of the invention, the details of construction and the embodiments may vary widely with respect to those described and illustrated purely by way of example, without departing from the scope of the present invention, as defined in the appended claims.

## Claims

1. A motor-vehicle, comprising:
- a plurality of disc brakes (F1, F2, F3, F4) associated with the wheels (R1, R2) of the motor-vehicle,
- each disc brake including a disc (D) connected in rotation with the respective wheel, and a brake caliper (C) provided with brake pads (BP1, BP2) cooperating with the disc (D),
- a braking system (3) to control the operation of said disc brakes (F1-F4) following the intervention of the driver on a brake pedal (2) or following the intervention of an automatic braking system with which the vehicle is provided, and
- an electronic controller (E) of said braking system (3),
- wherein a sensor (S1, S2) is associated with at least one brake pad (BP1, BP2) of at least some of said disc brakes (F1-F4), said sensor configured to send a signal to said electronic controller (E) that is indicative of the temperature of the brake pad (BP1, BP2), and a signal indicative of the wear (W), in terms of thickness reduction, of the brake pad (BP1, BP2),
said motor-vehicle being **characterized in that** said electronic controller (E) is configured in such a way that:
- when said sensors (S1, S2) detect wear of a brake pad of a single disc brake that exceeds the wear of the brake pads of other disc brakes of the motor-vehicle by a value (**Δ**W) greater than a predetermined threshold (**Δ**W₀),
or
- when said sensors (S1, S2) detect a temperature of a brake pad of a single disc brake which exceeds the temperature of the brake pads of other disc brakes of the motor-vehicle by a value (**ΔT**) greater than a predetermined threshold (**ΔT₀**), with the braking system being inactive,
this condition is interpreted as an indication of a blocked disc brake and said electronic controller (E) performs the following operations:
- the controller activates an operating mode in which, during braking, a braking effect obtained by means of a regenerative braking system with which the vehicle is equipped is exploited to the maximum extent,
- the controller disables an air conditioning system of the vehicle, to reduce energy consumption,
- the controller prevents the vehicle speed (V) from exceeding a predetermined maximum limit (V_{LIM}) to maintain a safe condition even with inefficient disc brakes.

2. A motor-vehicle according to claim 1, **characterized in that** said electronic controller (E) is configured to also perform the following operation:
- when said sensors (S1, S2) detect wear (W) of a brake pad (BP1, BP2) of at least one of the disc brakes of the motor-vehicle, which is lower than a predetermined threshold value (W₀), where said threshold value (W₀) is calculated as a function of the kilometers traveled by the motor-vehicle, and as a function of the time elapsed since a last replacement of said brake pad,
this condition is interpreted as an index of aging and/or loss of efficiency and/or risk of detachment of the brake pads due to prolonged inactivity, and said electronic controller performs the following operations:
- the controller disables a regenerative braking system with which the vehicle is provided, to facilitate running-in of the brake pads (BP1, BP2), and
- the controller generates an alarm signal for the driver and/or signals the need to stop the vehicle and/or the need to take the vehicle to the workshop to replace the brake pads.

3. A motor-vehicle according to claim 1, **characterized in that** said electronic controller (E) is configured to calculate the overall duration in time in which said sensors (S1, S2) detect the exceeding of a maximum threshold temperature (T₀) of a brake pad (BP1, BP2) of one of the disc brakes (F1-F4) of the motor-vehicle, in such a way that:
- when, during braking, said calculated duration (t_{T}>_{T0}) wherein the temperature is above said maximum threshold temperature (T₀), exceeds a predetermined length of time (t₀),
this condition is interpreted as due to damage in one or more brake discs and one or more brake pads following a *misuse* of the braking system, and said electronic controller (E) generates an alarm signal for the driver and/or indicates the need to stop the vehicle and/or the need to take the vehicle to the workshop.

4. A motor-vehicle according to claim 1, **characterized in that** said electronic controller (E) is also configured to perform one or more of the following operations:
a) detecting, during braking, the variation over time of the temperature (T) signaled by said sensors (S1, S2) for the brake pads associated with the different axles of the vehicle, and estimating the mass of the vehicle and the distribution of the load on the vehicle axles, as a function of said detected variation of the temperature (T) and on the basis of some information on the longitudinal acceleration of the vehicle, the information being transmitted to said electronic controller by an acceleration sensor, and, when a load on an axle of the vehicle that exceeds a predetermined threshold is detected, or when a difference between the loads on the vehicle axles that exceeds a predetermined threshold is detected, preventing the vehicle speed (V) from exceeding a predetermined maximum limit (V_{LIM}), to maintain a safety condition,
b) detecting a condition wherein said sensors (S1, S2) signal, for at least one of the disc brakes, the presence of a non-original brake pad, said sensors being configured to detect a code associated with the original brake pads, and preventing - when this condition is detected - the vehicle speed (V) from exceeding a predetermined maximum limit (V_{LIM}), to ensure a safety condition,
c) detecting a condition wherein, during braking, the temperature of a brake pad of at least one of the disc brakes of the motor-vehicle remains below a predetermined threshold value (T_{MIN}), interpreting this condition as an indication of failure, or hydraulic leaks in the braking system, and generating an alarm signal for the driver and/or a signal of the need to stop the vehicle and/or the need to bring the vehicle to the workshop,
d) detecting the variation over time of the wear (W) of at least some of the brake pads (BP1, BP2) of the disc brakes (F1-F4) of the vehicle, estimating, on the basis of this detected variation, the kilometers of residual life of the brake pads, performing an evaluation of the driving style with which the motor-vehicle is driven, based on some information received from said electronic controller (E) on parameters indicative of the driving style, such as frequency and intensity of braking actions, longitudinal and transversal accelerations of the vehicle, engine rpm, and limiting the maximum speed of the vehicle when in proximity of the end of the estimated life of the brake pads and/or if the detected driving style indicates an unsafe condition,
e) detecting when there is wear (W) higher than a threshold value (W₀) or a temperature (T) higher than a threshold value (T₀) on the disc brake pads of the same axle of the vehicle during braking, interpreting this condition as an indication of an overload on an axle of the vehicle during braking, and controlling said braking system to vary the ratio between the braking actions on different axles of the vehicle.

5. A method for controlling a motor-vehicle, wherein the motor-vehicle comprises:
- a plurality of disc brakes (F1-F4) associated with the wheels (R1, R2) of the motor-vehicle,
- each disc brake including a disc (D) connected in rotation with the respective wheel (R1, R2), and a brake caliper (C) provided with brake pads (BP1, BP2) cooperating with the disc (D),
- a braking system (3) to control the operation of said disc brakes (F1-F4) following the intervention of the driver on a brake pedal (2) or following the intervention of an automatic braking system with which the vehicle is provided, and
- an electronic controller (E) of said braking system (3),
- wherein a sensor (S1, S2) is associated with at least one brake pad (BP1, BP2) of at least some of the disc brakes (F1-F4), said sensor configured to send a signal to said electronic controller (E) that is indicative of the temperature (T) of the brake pad and a signal indicative of the wear (W), in terms of thickness reduction, of the brake pad (BP1, BP2),
said method being **characterized in that**:
- when said sensors (S1, S2) detect wear of a brake pad of a single disc brake that exceeds the wear of the brake pads of other disc brakes of the motor-vehicle by a value (**Δ**W) greater than a predetermined threshold (**Δ**W₀),
or
- when said sensors (S1, S2) detect a temperature of a brake pad (BP1, BP2) of a single disc brake, which exceeds the temperature (T) of the brake pads of other disc brakes of the motor-vehicle by a value (**ΔT**) greater than a predetermined threshold (**ΔT₀**), with the braking system being inactive,
this condition is interpreted as an indication of a blocked disc brake and said electronic controller (E) performs the following operations:
- the controller activates an operating mode wherein, during braking, a braking effect obtained by means of a regenerative braking system with which the vehicle is equipped is exploited to the maximum extent,
- the controller disables an air conditioning system of the vehicle, to reduce energy consumption,
- the controller prevents the vehicle speed from exceeding a predetermined maximum limit to maintain a safe condition even with inefficient disc brakes.

6. A method according to claim 5, **characterized in that** it further comprises the following operation:
- when said sensors detect wear of a brake pad of at least one of the disc brakes of the motor-vehicle, which is lower than a predetermined threshold value (W₀), where said threshold value (W₀) is calculated as a function of the kilometers traveled by the motor-vehicle and as a function of the time elapsed since a last replacement of said brake pad,
this condition is interpreted as an index of aging and/or loss of efficiency and/or risk of detachment of the brake pads due to prolonged inactivity, and said electronic controller (E) performs the following operations:
- the controller disables a regenerative braking system with which the vehicle is provided, to facilitate running-in of the brake pads, and
- the controller generates an alarm signal for the driver and/or signals the need to stop the vehicle and/or the need to take the vehicle to the workshop to replace the brake pads.

7. A method according to claim 5, **characterized in that** it comprises calculating the overall duration over time wherein said sensors detect an exceeding of a maximum threshold temperature (T₀) of a brake pad of one of the disc brakes of the motor-vehicle, in such a way that:
- when, during braking, said calculated duration (t_{(T>T0)}) wherein the temperature (T) is above said maximum threshold temperature (T₀), exceeds a predetermined length of time (t₀),
this condition is interpreted as due to damage in one or more brake discs and one or more brake pads following a *misuse* of the braking system, and said electronic controller (E) generates an alarm signal for the driver and/or indicates the need to stop the vehicle and/or the need to take the vehicle to the workshop.

8. A method according to claim 5, **characterized in that** it further comprises one or more of the following operations:
a) detecting, during braking, the variation over time of the temperature signaled by said sensors (S1, S2) for the brake pads associated with the different axles of the vehicle, and estimating the mass of the vehicle and the distribution of the load on the vehicle axles, as a function of said detected variation of the temperature and on the basis of some information on the longitudinal acceleration of the vehicle, the information being transmitted to said electronic controller (E) by an acceleration sensor, and, when a load on an axle of the vehicle that exceeds a predetermined threshold is detected, or when a difference between the loads on the vehicle axles that exceeds a predetermined threshold is detected, preventing the vehicle speed (V) from exceeding a predetermined maximum limit (V_{LIM}), to maintain a safety condition,
b) detecting a condition wherein said sensors (S1, S2) signal, for at least one of the disc brakes, the presence of a non-original brake pad, said sensors being configured to detect a code associated with the original brake pads, and preventing - when this condition is detected - the vehicle speed (V) from exceeding a predetermined maximum limit (V_{LIM}), to ensure a safety condition,
c) detecting a condition wherein, during braking, the temperature (T) of a brake pad of at least one of the disc brakes of the motor-vehicle remains below a predetermined threshold value (T_{MIN}), interpreting this condition as an indication of a failure, or of hydraulic leaks, in the braking system (3) and generating an alarm signal for the driver and/or a signal of the need to stop the vehicle and/or the need to take the vehicle to the workshop,
d) detecting the variation over time of the wear (W) of at least some of the brake pads of the disc brakes of the vehicle, estimating, on the basis of this detected variation, the kilometers of residual life of the brake pads (BP1, BP2), performing an evaluation of the driving style with which the motor-vehicle is driven, based on some information received from said electronic controller (E) on parameters indicative of the driving style, such as frequency and intensity of braking actions, longitudinal and transversal accelerations of the vehicle, engine rpm, and limiting the maximum speed of the vehicle when in proximity of the end of the estimated life of the brake pads and/or if the detected driving style indicates an unsafe condition,
e) detecting when there is wear (**Δ**W) higher than a threshold value (W₀) or when there is a temperature (T) higher than a threshold value (T₀) on the brake pads (BP1, BP2) of the disc brakes of the same axle of the vehicle during braking, interpreting this condition as an indication of an overload on an axle of the vehicle during braking and controlling said braking system (3) to vary the ratio between the braking actions on different axles of the vehicle.

## Patentansprüche

1. Ein Kraftfahrzeug, umfassend:
- eine Vielzahl von Scheibenbremsen (F1, F2, F3, F4), die den Rädern (R1, R2) des Kraftfahrzeugs zugeordnet sind,
- wobei jede Scheibenbremse eine Scheibe (D), die drehend mit dem jeweiligen Rad verbunden ist, und einen Bremszange (C) umfasst, der mit Bremsbelägen (BP1, BP2) ausgestattet ist, die mit der Scheibe (D) zusammenwirken,
- ein Bremssystem (3) zur Steuerung des Betriebs der genannten Scheibenbremsen (F1-F4) nach dem Eingriff des Fahrers auf ein Bremspedal (2) oder nach dem Eingriff eines automatischen Bremssystems, mit dem das Fahrzeug ausgestattet ist, und
- eine elektronische Steuereinheit (E) des genannten Bremssystems (3),
- wobei ein Sensor (S1, S2) mindestens einem Bremsbelag (BP1, BP2) mindestens einiger der genannten Scheibenbremsen (F1-F4) zugeordnet ist, wobei der genannte Sensor konfiguriert ist, um ein Signal an die genannte elektronische Steuereinheit (E) zu senden, das die Temperatur des Bremsbelags (BP1, BP2) anzeigt, und ein Signal, das den Verschleiß (W) in Bezug auf die Dickenreduzierung des Bremsbelags (BP1, BP2) anzeigt,
wobei das genannte Kraftfahrzeug **dadurch gekennzeichnet ist, dass** die genannte elektronische Steuereinheit (E) derart konfiguriert ist, dass:
- wenn die genannten Sensoren (S1, S2) einen Verschleiß eines Bremsbelags einer einzelnen Scheibenbremse erfassen, der den Verschleiß der Bremsbeläge anderer Scheibenbremsen des Kraftfahrzeugs um einen Wert (**Δ**W) überschreitet, der größer als ein vorbestimmter Schwellenwert (**Δ**W₀) ist,
oder
- wenn die genannten Sensoren (S1, S2) eine Temperatur eines Bremsbelags einer einzelnen Scheibenbremse erfassen, die die Temperatur der Bremsbeläge anderer Scheibenbremsen des Kraftfahrzeugs um einen Wert **(ΔT)** überschreitet, der größer als ein vorbestimmter Schwellenwert (**ΔT₀**) ist, wobei das Bremssystem inaktiv ist,
diese Bedingung als Hinweis auf eine blockierte Scheibenbremse interpretiert wird und die genannte elektronische Steuereinheit (E) die folgenden Operationen durchführt:
- die Steuereinheit aktiviert einen Betriebsmodus, bei dem während des Bremsens ein Bremseneffekt, der mittels eines Rekuperationsbremsensystems, mit dem das Fahrzeug ausgestattet ist, erzielt wird, maximal ausgenutzt wird,
- die Steuereinheit deaktiviert eine Klimaanlage des Fahrzeugs, um den Energieverbrauch zu reduzieren,
- die Steuereinheit verhindert, dass die Fahrzeuggeschwindigkeit (V) einen vorbestimmten maximalen Grenzwert (V_{LIM}) überschreitet, um einen sicheren Zustand auch bei ineffizienten Scheibenbremsen aufrechtzuerhalten.

2. Kraftfahrzeug nach Anspruch 1, **dadurch gekennzeichnet, dass** die genannte elektronische Steuereinheit (E) konfiguriert ist, um auch die folgende Operation durchzuführen:
- wenn die genannten Sensoren (S1, S2) einen Verschleiß (W) eines Bremsbelags (BP1, BP2) mindestens einer der Scheibenbremsen des Kraftfahrzeugs erfassen, der niedriger als ein vorbestimmter Schwellenwert (W₀) ist, wobei der genannte Schwellenwert (W₀) als Funktion der vom Kraftfahrzeug zurückgelegten Kilometer und als Funktion der seit einem letzten Austausch des genannten Bremsbelags verstrichenen Zeit berechnet wird,
diese Bedingung als Indikator für Alterung und/oder Effizienzverlust und/oder Ablöserisiko der Bremsbeläge aufgrund längerer Inaktivität interpretiert wird und die genannte elektronische Steuereinheit die folgenden Operationen durchführt:
- die Steuereinheit deaktiviert ein Rekuperationsbremsensystem, mit dem das Fahrzeug ausgestattet ist, um das Einlaufen der Bremsbeläge (BP1, BP2) zu erleichtern, und
- die Steuereinheit erzeugt ein Alarmsignal für den Fahrer und/oder signalisiert die Notwendigkeit, das Fahrzeug anzuhalten und/oder die Notwendigkeit, das Fahrzeug in die Werkstatt zu bringen, um die Bremsbeläge zu ersetzen.

3. Kraftfahrzeug nach Anspruch 1, **dadurch gekennzeichnet, dass** die genannte elektronische Steuereinheit (E) konfiguriert ist, um die Gesamtdauer in Zeit zu berechnen, in der die genannten Sensoren (S1, S2) das Überschreiten einer maximalen Schwellentemperatur (T₀) eines Bremsbelags (BP1, BP2) einer der Scheibenbremsen (F1-F4) des Kraftfahrzeugs erfassen, derart, dass:
- wenn während des Bremsens die genannte berechnete Dauer (t_{T}>_{T0}), in der die Temperatur über der genannten maximalen Schwellentemperatur (T₀) liegt, eine vorbestimmte Zeitspanne (t₀) überschreitet,
diese Bedingung als Folge einer Beschädigung in einer oder mehreren Bremsscheiben und einem oder mehreren Bremsbelägen infolge eines *Fehlgebrauchs* des Bremssystems interpretiert wird und die genannte elektronische Steuereinheit (E) ein Alarmsignal für den Fahrer erzeugt und/oder die Notwendigkeit anzeigt, das Fahrzeug anzuhalten und/oder die Notwendigkeit, das Fahrzeug in die Werkstatt zu bringen.

4. Kraftfahrzeug nach Anspruch 1, **dadurch gekennzeichnet, dass** die genannte elektronische Steuereinheit (E) auch konfiguriert ist, um eine oder mehrere der folgenden Operationen durchzuführen:
a) Erfassen, während des Bremsens, der zeitlichen Variation der Temperatur (T), die von den genannten Sensoren (S1, S2) für die den verschiedenen Achsen des Fahrzeugs zugeordneten Bremsbeläge signalisiert wird, und Schätzen der Masse des Fahrzeugs und der Verteilung der Last auf die Fahrzeugachsen als Funktion der genannten erfassten Variation der Temperatur (T) und auf der Grundlage einiger Informationen über die Längsbeschleunigung des Fahrzeugs, wobei die Informationen von einem Beschleunigungssensor an die genannte elektronische Steuereinheit übertragen werden, und, wenn eine Last auf einer Achse des Fahrzeugs, die einen vorbestimmten Schwellenwert überschreitet, erfasst wird, oder wenn eine Differenz zwischen den Lasten auf den Fahrzeugachsen, die einen vorbestimmten Schwellenwert überschreitet, erfasst wird, Verhindern, dass die Fahrzeuggeschwindigkeit (V) einen vorbestimmten maximalen Grenzwert (V_{LIM}) überschreitet, um einen Sicherheitszustand aufrechtzuerhalten,
b) Erfassen einer Bedingung, bei der die genannten Sensoren (S1, S2) für mindestens eine der Scheibenbremsen das Vorhandensein eines nicht-originalen Bremsbelags signalisieren, wobei die genannten Sensoren konfiguriert sind, um einen Code zu erfassen, der den originalen Bremsbelägen zugeordnet ist, und Verhindern - wenn diese Bedingung erfasst wird - dass die Fahrzeuggeschwindigkeit (V) einen vorbestimmten maximalen Grenzwert (V_{LIM}) überschreitet, um einen Sicherheitszustand zu gewährleisten,
c) Erfassen einer Bedingung, bei der während des Bremsens die Temperatur eines Bremsbelags mindestens einer der Scheibenbremsen des Kraftfahrzeugs unter einem vorbestimmten Schwellenwert (T_{MIN}) bleibt, Interpretieren dieser Bedingung als Hinweis auf einen Ausfall oder hydraulische Lecks im Bremssystem und Erzeugen eines Alarmsignals für den Fahrer und/oder eines Signals der Notwendigkeit, das Fahrzeug anzuhalten und/oder der Notwendigkeit, das Fahrzeug in die Werkstatt zu bringen,
d) Erfassen der zeitlichen Variation des Verschleißes (W) mindestens einiger der Bremsbeläge (BP1, BP2) der Scheibenbremsen (F1-F4) des Fahrzeugs, Schätzen, auf der Grundlage dieser erfassten Variation, der Kilometer der Restlebensdauer der Bremsbeläge, Durchführen einer Bewertung des Fahrstils, mit dem das Kraftfahrzeug gefahren wird, basierend auf einigen Informationen, die von der genannten elektronischen Steuereinheit (E) zu Parametern empfangen werden, die den Fahrstil anzeigen, wie Häufigkeit und Intensität von Bremsvorgängen, Längs- und Querbeschleunigungen des Fahrzeugs, Motordrehzahl, und Begrenzen der Höchstgeschwindigkeit des Fahrzeugs in der Nähe des Endes der geschätzten Lebensdauer der Bremsbeläge und/oder wenn der erfasste Fahrstil einen unsicheren Zustand anzeigt,
e) Erfassen, wenn ein Verschleiß (W) höher als ein Schwellenwert (W₀) oder eine Temperatur (T) höher als ein Schwellenwert (T₀) an den Bremsbelägen der Scheibenbremsen derselben Achse des Fahrzeugs während des Bremsens vorliegt, Interpretieren dieser Bedingung als Hinweis auf eine Überlastung einer Achse des Fahrzeugs während des Bremsens und Steuern des genannten Bremssystems, um das Verhältnis zwischen den Bremsvorgängen auf verschiedenen Achsen des Fahrzeugs zu variieren.

5. Ein Verfahren zur Steuerung eines Kraftfahrzeugs, wobei das Kraftfahrzeug umfasst:
- eine Vielzahl von Scheibenbremsen (F1-F4), die den Rädern (R1, R2) des Kraftfahrzeugs zugeordnet sind,
- wobei jede Scheibenbremse eine Scheibe (D), die drehend mit dem jeweiligen Rad (R1, R2) verbunden ist, und einen Bremszange (C) umfasst, der mit Bremsbelägen (BP1, BP2) ausgestattet ist, die mit der Scheibe (D) zusammenwirken,
- ein Bremssystem (3) zur Steuerung des Betriebs der genannten Scheibenbremsen (F1-F4) nach dem Eingriff des Fahrers auf ein Bremspedal (2) oder nach dem Eingriff eines automatischen Bremssystems, mit dem das Fahrzeug ausgestattet ist, und
- eine elektronische Steuereinheit (E) des genannten Bremssystems (3),
- wobei ein Sensor (S1, S2) mindestens einem Bremsbelag (BP1, BP2) mindestens einiger der Scheibenbremsen (F1-F4) zugeordnet ist, wobei der genannte Sensor konfiguriert ist, um ein Signal an die genannte elektronische Steuereinheit (E) zu senden, das die Temperatur (T) des Bremsbelags anzeigt, und ein Signal, das den Verschleiß (W) in Bezug auf die Dickenreduzierung des Bremsbelags (BP1, BP2) anzeigt,
wobei das genannte Verfahren **dadurch gekennzeichnet ist, dass**:
- wenn die genannten Sensoren (S1, S2) einen Verschleiß eines Bremsbelags einer einzelnen Scheibenbremse erfassen, der den Verschleiß der Bremsbeläge anderer Scheibenbremsen des Kraftfahrzeugs um einen Wert (ΔW) überschreitet, der größer als ein vorbestimmter Schwellenwert (ΔW₀) ist,
oder
- wenn die genannten Sensoren (S1, S2) eine Temperatur eines Bremsbelags (BP1, BP2) einer einzelnen Scheibenbremse erfassen, die die Temperatur (T) der Bremsbeläge anderer Scheibenbremsen des Kraftfahrzeugs um einen Wert (ΔT) überschreitet, der größer als ein vorbestimmter Schwellenwert (ΔT₀) ist, wobei das Bremssystem inaktiv ist,
diese Bedingung als Hinweis auf eine blockierte Scheibenbremse interpretiert wird und die genannte elektronische Steuereinheit (E) die folgenden Operationen durchführt:
- die Steuereinheit aktiviert einen Betriebsmodus, bei dem während des Bremsens ein Bremseneffekt, der mittels eines Rekuperationsbremsensystems, mit dem das Fahrzeug ausgestattet ist, erzielt wird, maximal ausgenutzt wird,
- die Steuereinheit deaktiviert eine Klimaanlage des Fahrzeugs, um den Energieverbrauch zu reduzieren,
- die Steuereinheit verhindert, dass die Fahrzeuggeschwindigkeit einen vorbestimmten maximalen Grenzwert überschreitet, um einen sicheren Zustand auch bei ineffizienten Scheibenbremsen aufrechtzuerhalten.

6. Verfahren nach Anspruch 5, **dadurch gekennzeichnet, dass** es ferner die folgende Operation umfasst:
- wenn die genannten Sensoren einen Verschleiß eines Bremsbelags mindestens einer der Scheibenbremsen des Kraftfahrzeugs erfassen, der niedriger als ein vorbestimmter Schwellenwert (W₀) ist, wobei der genannte Schwellenwert (W₀) als Funktion der vom Kraftfahrzeug zurückgelegten Kilometer und als Funktion der seit einem letzten Austausch des genannten Bremsbelags verstrichenen Zeit berechnet wird,
diese Bedingung als Indikator für Alterung und/oder Effizienzverlust und/oder Ablöserisiko der Bremsbeläge aufgrund längerer Inaktivität interpretiert wird und die genannte elektronische Steuereinheit (E) die folgenden Operationen durchführt:
- die Steuereinheit deaktiviert ein Rekuperationsbremsensystem, mit dem das Fahrzeug ausgestattet ist, um das Einlaufen der Bremsbeläge zu erleichtern, und
- die Steuereinheit erzeugt ein Alarmsignal für den Fahrer und/oder signalisiert die Notwendigkeit, das Fahrzeug anzuhalten und/oder die Notwendigkeit, das Fahrzeug in die Werkstatt zu bringen, um die Bremsbeläge zu ersetzen.

7. Verfahren nach Anspruch 5, **dadurch gekennzeichnet, dass** es das Berechnen der Gesamtdauer über die Zeit umfasst, in der die genannten Sensoren ein Überschreiten einer maximalen Schwellentemperatur (T₀) eines Bremsbelags einer der Scheibenbremsen des Kraftfahrzeugs erfassen, derart, dass:
- wenn während des Bremsens die genannte berechnete Dauer (t_{(T>T0)}), in der die Temperatur (T) über der genannten maximalen Schwellentemperatur (T₀) liegt, eine vorbestimmte Zeitspanne (t₀) überschreitet,
diese Bedingung als Folge einer Beschädigung in einer oder mehreren Bremsscheiben und einem oder mehreren Bremsbelägen infolge eines *Fehlgebrauchs* des Bremssystems interpretiert wird und die genannte elektronische Steuereinheit (E) ein Alarmsignal für den Fahrer erzeugt und/oder die Notwendigkeit anzeigt, das Fahrzeug anzuhalten und/oder die Notwendigkeit, das Fahrzeug in die Werkstatt zu bringen.

8. Verfahren nach Anspruch 5, **dadurch gekennzeichnet, dass** es ferner eine oder mehrere der folgenden Operationen umfasst:
a) Erfassen, während des Bremsens, der zeitlichen Variation der Temperatur, die von den genannten Sensoren (S1, S2) für die den verschiedenen Achsen des Fahrzeugs zugeordneten Bremsbeläge signalisiert wird, und Schätzen der Masse des Fahrzeugs und der Verteilung der Last auf die Fahrzeugachsen als Funktion der genannten erfassten Variation der Temperatur und auf der Grundlage einiger Informationen über die Längsbeschleunigung des Fahrzeugs, wobei die Informationen von einem Beschleunigungssensor an die genannte elektronische Steuereinheit (E) übertragen werden, und, wenn eine Last auf einer Achse des Fahrzeugs, die einen vorbestimmten Schwellenwert überschreitet, erfasst wird, oder wenn eine Differenz zwischen den Lasten auf den Fahrzeugachsen, die einen vorbestimmten Schwellenwert überschreitet, erfasst wird, Verhindern, dass die Fahrzeuggeschwindigkeit (V) einen vorbestimmten maximalen Grenzwert (V_{LIM}) überschreitet, um einen Sicherheitszustand aufrechtzuerhalten,
b) Erfassen einer Bedingung, bei der die genannten Sensoren (S1, S2) für mindestens eine der Scheibenbremsen das Vorhandensein eines nicht-originalen Bremsbelags signalisieren, wobei die genannten Sensoren konfiguriert sind, um einen Code zu erfassen, der den originalen Bremsbelägen zugeordnet ist, und Verhindern - wenn diese Bedingung erfasst wird - dass die Fahrzeuggeschwindigkeit (V) einen vorbestimmten maximalen Grenzwert (V_{LIM}) überschreitet, um einen Sicherheitszustand zu gewährleisten,
c) Erfassen einer Bedingung, bei der während des Bremsens die Temperatur (T) eines Bremsbelags mindestens einer der Scheibenbremsen des Kraftfahrzeugs unter einem vorbestimmten Schwellenwert (T_{MIN}) bleibt, Interpretieren dieser Bedingung als Hinweis auf einen Ausfall oder auf hydraulische Lecks im Bremssystem (3) und Erzeugen eines Alarmsignals für den Fahrer und/oder eines Signals der Notwendigkeit, das Fahrzeug anzuhalten und/oder der Notwendigkeit, das Fahrzeug in die Werkstatt zu bringen,
d) Erfassen der zeitlichen Variation des Verschleißes (W) mindestens einiger der Bremsbeläge der Scheibenbremsen des Fahrzeugs, Schätzen, auf der Grundlage dieser erfassten Variation, der Kilometer der Restlebensdauer der Bremsbeläge (BP1, BP2), Durchführen einer Bewertung des Fahrstils, mit dem das Kraftfahrzeug gefahren wird, basierend auf einigen Informationen, die von der genannten elektronischen Steuereinheit (E) zu Parametern empfangen werden, die den Fahrstil anzeigen, wie Häufigkeit und Intensität von Bremsvorgängen, Längs- und Querbeschleunigungen des Fahrzeugs, Motordrehzahl, und Begrenzen der Höchstgeschwindigkeit des Fahrzeugs in der Nähe des Endes der geschätzten Lebensdauer der Bremsbeläge und/oder wenn der erfasste Fahrstil einen unsicheren Zustand anzeigt,
e) Erfassen, wenn ein Verschleiß (**Δ**W) höher als ein Schwellenwert (W₀) oder wenn eine Temperatur (T) höher als ein Schwellenwert (T₀) an den Bremsbelägen (BP1, BP2) der Scheibenbremsen derselben Achse des Fahrzeugs während des Bremsens vorliegt, Interpretieren dieser Bedingung als Hinweis auf eine Überlastung einer Achse des Fahrzeugs während des Bremsens und Steuern des genannten Bremssystems (3), um das Verhältnis zwischen den Bremsvorgängen auf verschiedenen Achsen des Fahrzeugs zu variieren.

## Revendications

1. Véhicule automobile, comprenant :
- une pluralité de freins à disque (F1, F2, F3, F4) associés aux roues (R1, R2) du véhicule automobile,
- chaque frein à disque comprenant un disque (D) connecté en rotation avec la roue respective, et un étrier de frein (C) muni de plaquettes de frein (BP1, BP2) coopérant avec le disque (D),
- un système de freinage (3) pour commander le fonctionnement desdits freins à disque (F1-F4) suite à l'intervention du conducteur sur une pédale de frein (2) ou suite à l'intervention d'un système de freinage automatique dont est muni le véhicule, et
- un contrôleur électronique (E) dudit système de freinage (3),
- dans lequel un capteur (S1, S2) est associé à au moins une plaquette de frein (BP1, BP2) d'au moins certains desdits freins à disque (F1-F4), ledit capteur configuré pour envoyer un signal audit contrôleur électronique (E) qui est indicatif de la température de la plaquette de frein (BP1, BP2), et un signal indicatif de l'usure (W), en termes de réduction d'épaisseur, de la plaquette de frein (BP1, BP2),
ledit véhicule automobile étant **caractérisé en ce que** ledit contrôleur électronique (E) est configuré de telle sorte que :
- lorsque lesdits capteurs (S1, S2) détectent une usure d'une plaquette de frein d'un seul frein à disque qui dépasse l'usure des plaquettes de frein des autres freins à disque du véhicule automobile d'une valeur (**Δ**W) supérieure à un seuil prédéterminé (**Δ**W₀),
ou
- lorsque lesdits capteurs (S1, S2) détectent une température d'une plaquette de frein d'un seul frein à disque qui dépasse la température des plaquettes de frein des autres freins à disque du véhicule automobile d'une valeur (**ΔT**) supérieure à un seuil prédéterminé (**ΔT₀**), le système de freinage étant inactif,
cette condition est interprétée comme une indication d'un frein à disque bloqué et ledit contrôleur électronique (E) effectue les opérations suivantes :
- le contrôleur active un mode de fonctionnement dans lequel, pendant le freinage, un effet de freinage obtenu au moyen d'un système de freinage régénératif dont est équipé le véhicule est exploité au maximum,
- le contrôleur désactive un système de climatisation du véhicule, pour réduire la consommation d'énergie,
- le contrôleur empêche la vitesse du véhicule (V) de dépasser une limite maximale prédéterminée (V_{LIM}) pour maintenir une condition de sécurité même avec des freins à disque inefficaces.

2. Véhicule automobile selon la revendication 1, **caractérisé en ce que** ledit contrôleur électronique (E) est configuré pour effectuer également l'opération suivante :
- lorsque lesdits capteurs (S1, S2) détectent une usure (W) d'une plaquette de frein (BP1, BP2) d'au moins l'un des freins à disque du véhicule automobile, qui est inférieure à une valeur seuil prédéterminée (W₀), où ladite valeur seuil (W₀) est calculée en fonction des kilomètres parcourus par le véhicule automobile, et en fonction du temps écoulé depuis un dernier remplacement de ladite plaquette de frein,
cette condition est interprétée comme un indice de vieillissement et/ou de perte d'efficacité et/ou de risque de détachement des plaquettes de frein en raison d'une inactivité prolongée, et ledit contrôleur électronique effectue les opérations suivantes :
- le contrôleur désactive un système de freinage régénératif dont est muni le véhicule, pour faciliter le rodage des plaquettes de frein (BP1, BP2), et
- le contrôleur génère un signal d'alarme pour le conducteur et/ou signale la nécessité d'arrêter le véhicule et/ou la nécessité d'amener le véhicule à l'atelier pour remplacer les plaquettes de frein.

3. Véhicule automobile selon la revendication 1, **caractérisé en ce que** ledit contrôleur électronique (E) est configuré pour calculer la durée globale dans le temps pendant laquelle lesdits capteurs (S1, S2) détectent le dépassement d'une température seuil maximale (T₀) d'une plaquette de frein (BP1, BP2) de l'un des freins à disque (F1-F4) du véhicule automobile, de telle sorte que :
- lorsque, pendant le freinage, ladite durée calculée (t_{T}>_{T0}) où la température est supérieure à ladite température seuil maximale (T₀), dépasse une durée prédéterminée (t₀),
cette condition est interprétée comme étant due à un dommage dans un ou plusieurs disques de frein et une ou plusieurs plaquettes de frein suite à un *misuse* du système de freinage, et ledit contrôleur électronique (E) génère un signal d'alarme pour le conducteur et/ou indique la nécessité d'arrêter le véhicule et/ou la nécessité d'amener le véhicule à l'atelier.

4. Véhicule automobile selon la revendication 1, **caractérisé en ce que** ledit contrôleur électronique (E) est également configuré pour effectuer une ou plusieurs des opérations suivantes :
a) détecter, pendant le freinage, la variation dans le temps de la température (T) signalée par lesdits capteurs (S1, S2) pour les plaquettes de frein associées aux différents essieux du véhicule, et estimer la masse du véhicule et la répartition de la charge sur les essieux du véhicule, en fonction de ladite variation détectée de la température (T) et sur la base de certaines informations sur l'accélération longitudinale du véhicule, les informations étant transmises audit contrôleur électronique par un capteur d'accélération, et, lorsqu'une charge sur un essieu du véhicule qui dépasse un seuil prédéterminé est détectée, ou lorsqu'une différence entre les charges sur les essieux du véhicule qui dépasse un seuil prédéterminé est détectée, empêcher la vitesse du véhicule (V) de dépasser une limite maximale prédéterminée (V_{LIM}), pour maintenir une condition de sécurité,
b) détecter une condition dans laquelle lesdits capteurs (S1, S2) signalent, pour au moins l'un des freins à disque, la présence d'une plaquette de frein non d'origine, lesdits capteurs étant configurés pour détecter un code associé aux plaquettes de frein d'origine, et empêcher - lorsque cette condition est détectée - la vitesse du véhicule (V) de dépasser une limite maximale prédéterminée (V_{LIM}), pour assurer une condition de sécurité,
c) détecter une condition dans laquelle, pendant le freinage, la température d'une plaquette de frein d'au moins l'un des freins à disque du véhicule automobile reste inférieure à une valeur seuil prédéterminée (T_{MIN}), interpréter cette condition comme une indication de défaillance, ou de fuites hydrauliques dans le système de freinage, et générer un signal d'alarme pour le conducteur et/ou un signal de la nécessité d'arrêter le véhicule et/ou de la nécessité d'amener le véhicule à l'atelier,
d) détecter la variation dans le temps de l'usure (W) d'au moins certaines des plaquettes de frein (BP1, BP2) des freins à disque (F1-F4) du véhicule, estimer, sur la base de cette variation détectée, les kilomètres de vie résiduelle des plaquettes de frein, effectuer une évaluation du style de conduite avec lequel le véhicule automobile est conduit, sur la base de certaines informations reçues dudit contrôleur électronique (E) sur des paramètres indicatifs du style de conduite, tels que la fréquence et l'intensité des actions de freinage, les accélérations longitudinales et transversales du véhicule, le régime moteur, et limiter la vitesse maximale du véhicule à proximité de la fin de la vie estimée des plaquettes de frein et/ou si le style de conduite détecté indique une condition non sécuritaire,
e) détecter lorsqu'il y a une usure (W) supérieure à une valeur seuil (W₀) ou une température (T) supérieure à une valeur seuil (T₀) sur les plaquettes de frein à disque du même essieu du véhicule pendant le freinage, interpréter cette condition comme une indication d'une surcharge sur un essieu du véhicule pendant le freinage, et commander ledit système de freinage pour faire varier le rapport entre les actions de freinage sur différents essieux du véhicule.

5. Procédé de commande d'un véhicule automobile, dans lequel le véhicule automobile comprend :
- une pluralité de freins à disque (F1-F4) associés aux roues (R1, R2) du véhicule automobile,
- chaque frein à disque comprenant un disque (D) connecté en rotation avec la roue respective (R1, R2), et un étrier de frein (C) muni de plaquettes de frein (BP1, BP2) coopérant avec le disque (D),
- un système de freinage (3) pour commander le fonctionnement desdits freins à disque (F1-F4) suite à l'intervention du conducteur sur une pédale de frein (2) ou suite à l'intervention d'un système de freinage automatique dont est muni le véhicule, et
- un contrôleur électronique (E) dudit système de freinage (3),
- dans lequel un capteur (S1, S2) est associé à au moins une plaquette de frein (BP1, BP2) d'au moins certains des freins à disque (F1-F4), ledit capteur configuré pour envoyer un signal audit contrôleur électronique (E) qui est indicatif de la température (T) de la plaquette de frein et un signal indicatif de l'usure (W), en termes de réduction d'épaisseur, de la plaquette de frein (BP1, BP2),
ledit procédé étant **caractérisé en ce que** :
- lorsque lesdits capteurs (S1, S2) détectent une usure d'une plaquette de frein d'un seul frein à disque qui dépasse l'usure des plaquettes de frein des autres freins à disque du véhicule automobile d'une valeur (ΔW) supérieure à un seuil prédéterminé (ΔW₀),
ou
- lorsque lesdits capteurs (S1, S2) détectent une température d'une plaquette de frein (BP1, BP2) d'un seul frein à disque, qui dépasse la température (T) des plaquettes de frein des autres freins à disque du véhicule automobile d'une valeur (**ΔT**) supérieure à un seuil prédéterminé (**ΔT₀**), le système de freinage étant inactif,
cette condition est interprétée comme une indication d'un frein à disque bloqué et ledit contrôleur électronique (E) effectue les opérations suivantes :
- le contrôleur active un mode de fonctionnement dans lequel, pendant le freinage, un effet de freinage obtenu au moyen d'un système de freinage régénératif dont est équipé le véhicule est exploité au maximum,
- le contrôleur désactive un système de climatisation du véhicule, pour réduire la consommation d'énergie,
- le contrôleur empêche la vitesse du véhicule de dépasser une limite maximale prédéterminée pour maintenir une condition de sécurité même avec des freins à disque inefficaces.

6. Procédé selon la revendication 5, **caractérisé en ce qu'**il comprend en outre l'opération suivante :
- lorsque lesdits capteurs détectent une usure d'une plaquette de frein d'au moins l'un des freins à disque du véhicule automobile, qui est inférieure à une valeur seuil prédéterminée (W₀), où ladite valeur seuil (W₀) est calculée en fonction des kilomètres parcourus par le véhicule automobile et en fonction du temps écoulé depuis un dernier remplacement de ladite plaquette de frein,
cette condition est interprétée comme un indice de vieillissement et/ou de perte d'efficacité et/ou de risque de détachement des plaquettes de frein en raison d'une inactivité prolongée, et ledit contrôleur électronique (E) effectue les opérations suivantes :
- le contrôleur désactive un système de freinage régénératif dont est muni le véhicule, pour faciliter le rodage des plaquettes de frein, et
- le contrôleur génère un signal d'alarme pour le conducteur et/ou signale la nécessité d'arrêter le véhicule et/ou la nécessité d'amener le véhicule à l'atelier pour remplacer les plaquettes de frein.

7. Procédé selon la revendication 5, **caractérisé en ce qu'**il comprend le calcul de la durée globale dans le temps pendant laquelle lesdits capteurs détectent un dépassement d'une température seuil maximale (T₀) d'une plaquette de frein de l'un des freins à disque du véhicule automobile, de telle sorte que :
- lorsque, pendant le freinage, ladite durée calculée (t_{(T>T0)}) où la température (T) est supérieure à ladite température seuil maximale (T₀), dépasse une durée prédéterminée (t₀),
cette condition est interprétée comme étant due à un dommage dans un ou plusieurs disques de frein et une ou plusieurs plaquettes de frein suite à un *misuse* du système de freinage, et ledit contrôleur électronique (E) génère un signal d'alarme pour le conducteur et/ou indique la nécessité d'arrêter le véhicule et/ou la nécessité d'amener le véhicule à l'atelier.

8. Procédé selon la revendication 5, **caractérisé en ce qu'**il comprend en outre une ou plusieurs des opérations suivantes :
a) détecter, pendant le freinage, la variation dans le temps de la température signalée par lesdits capteurs (S1, S2) pour les plaquettes de frein associées aux différents essieux du véhicule, et estimer la masse du véhicule et la répartition de la charge sur les essieux du véhicule, en fonction de ladite variation détectée de la température et sur la base de certaines informations sur l'accélération longitudinale du véhicule, les informations étant transmises audit contrôleur électronique (E) par un capteur d'accélération, et, lorsqu'une charge sur un essieu du véhicule qui dépasse un seuil prédéterminé est détectée, ou lorsqu'une différence entre les charges sur les essieux du véhicule qui dépasse un seuil prédéterminé est détectée, empêcher la vitesse du véhicule (V) de dépasser une limite maximale prédéterminée (V_{LIM}), pour maintenir une condition de sécurité,
b) détecter une condition dans laquelle lesdits capteurs (S1, S2) signalent, pour au moins l'un des freins à disque, la présence d'une plaquette de frein non d'origine, lesdits capteurs étant configurés pour détecter un code associé aux plaquettes de frein d'origine, et empêcher - lorsque cette condition est détectée - la vitesse du véhicule (V) de dépasser une limite maximale prédéterminée (V_{LIM}), pour assurer une condition de sécurité,
c) détecter une condition dans laquelle, pendant le freinage, la température (T) d'une plaquette de frein d'au moins l'un des freins à disque du véhicule automobile reste inférieure à une valeur seuil prédéterminée (T_{MIN}), interpréter cette condition comme une indication d'une défaillance, ou de fuites hydrauliques, dans le système de freinage (3) et générer un signal d'alarme pour le conducteur et/ou un signal de la nécessité d'arrêter le véhicule et/ou de la nécessité d'amener le véhicule à l'atelier,
d) détecter la variation dans le temps de l'usure (W) d'au moins certaines des plaquettes de frein des freins à disque du véhicule, estimer, sur la base de cette variation détectée, les kilomètres de vie résiduelle des plaquettes de frein (BP1, BP2), effectuer une évaluation du style de conduite avec lequel le véhicule automobile est conduit, sur la base de certaines informations reçues dudit contrôleur électronique (E) sur des paramètres indicatifs du style de conduite, tels que la fréquence et l'intensité des actions de freinage, les accélérations longitudinales et transversales du véhicule, le régime moteur, et limiter la vitesse maximale du véhicule à proximité de la fin de la vie estimée des plaquettes de frein et/ou si le style de conduite détecté indique une condition non sécuritaire,
e) détecter lorsqu'il y a une usure (**Δ**W) supérieure à une valeur seuil (W₀) ou lorsqu'il y a une température (T) supérieure à une valeur seuil (T₀) sur les plaquettes de frein (BP1, BP2) des freins à disque du même essieu du véhicule pendant le freinage, interpréter cette condition comme une indication d'une surcharge sur un essieu du véhicule pendant le freinage et commander ledit système de freinage (3) pour faire varier le rapport entre les actions de freinage sur différents essieux du véhicule.
